# EUROPÄISCHE PATENTSCHRIFT

(11) **EP 0 837 800 B1**
(45) Veröffentlichungstag und Bekanntmachung des Hinweises auf die Patenterteilung: **15.03.2000**
(21) Anmeldenummer: 96924863.2
(22) Anmeldetag: 03.07.1996
(51) Int. Cl.: B60T 7/12

(54) **VERFAHREN ZUM HALTEN EINES FAHRZEUGS AUF GENEIGTER FAHRBAHN**
PROCESS FOR RETAINING A VEHICLE ON AN INCLINED ROADWAY
PROCEDE DE RETENUE D'UN VEHICULE SUR UNE CHAUSSEE INCLINEE

(30) Priorität: 13.07.1995 DE 19525552
(43) Veröffentlichungstag der Anmeldung: 29.04.1998
(73) Patentinhaber: Continental Teves AG & Co. oHG, 60488 Frankfurt (DE)
(72) Erfinder: BUSCHMANN, Gunther, D-65510 Idstein (DE); HAUPT, Karlheinz, D-55435 Gau-Algesheim (DE); KUZEL, Thomas, D-63457 Hanau (DE)
(86) Internationale Anmeldenummer: EP9602910
(87) Internationale Veröffentlichungsnummer: WO9702969

(56) Entgegenhaltungen:
- EP-A- 0 111 778
- DE-A- 3 618 532
- DE-A- 3 909 907
- US-A- 4 629 043

## Beschreibung

Die Erfindung bezieht sich auf ein Verfahren zum Halten eines Fahrzeugs auf geneigter Fahrbahn und beim Anfahren am Berg, bei dem unter Berücksichtigung der Fahrzeuggeschwindigkeit und der Bremspedalbetätigung oder entsprechender Kriterien Bremskraft an einzelnen oder an mehreren Fahrzeugrädern, insbesondere an den Rädern einer Achse, aufgebracht wird, d.h. aufrechterhalten, erhöht und wieder abgebaut wird.

Durch solche Haltehilfen oder Haltesysteme, die auch als "Hill-Holder" bezeichnet werden, wird das unbeabsichtigte Rollen eines Fahrzeugs auf geneigter Fahrbahn verhindert und das Anfahren am Berg, auch für den Ungeübten, erleichtert. Haltesysteme dieser Art erhöhen also den Komfort und verhindern Karambolagen durch Unachtsamkeit, Kupplungsschäden durch Bedienungsfehler etc.

Aus der DE 3.618.532 C2 ist bereits eine Bremseinrichtung bekannt, die für ein Kraftfahrzeug vorgesehen ist und bei der die Bremsbetätigung in Abhängigkeit von dem gemessenen und benötigten Anfahrmoment gesteuert wird. Mit dieser Bremseinrichtung soll bei unterschiedlicher Beladung des Fahrzeugs und unterschiedlicher Straßenneigung ein sanftes Anfahren des Fahrzeugs gewährleistet werden. Hierzu werden die Fahrzeuggeschwindigkeit, die Kupplungsbetätigung, die Getriebegangstellung und weitere Parameter sensiert und zum Öffnen und Schließen eines Bremsdruckhalteventils ausgewertet, das die Verbindung zwischen einem Hauptzylinder der Bremseinrichtung und einer oder mehreren Radbremsen öffnet oder sperrt. Bei geschlossenem Ventil wird das zum Anfahren des Fahrzeugs erforderliche Soll-Drehmoment des Antriebsmotors des Fahrzeugs mit dem verfügbaren Ist-Drehmoment verglichen und bei Überschreitung eines bestimmten Differenzwertes ein Signal zum Öffnen des Bremsdruckhalteventils abgegeben.

Der Betätigungszustand der Feststellbremse wird ebenfalls sensiert; das Bremsdruckhalteventil wird nur dann angesteuert, wenn die Feststellbremse gelöst ist.

Des weiteren ist aus der DE 3.439. 067 C2 eine Anordnung zum Feststellen einer druckmittelbetätigten Radbremse bekannt, bei der zum Halten des Fahrzeugs von Komponenten der Bremsanlage, die an sich zur Blockierschutzregelung vorgesehen sind, Gebrauch gemacht wird. Beim Freigeben des Bremsspedals wird bei dieser bekannten Anordnung der Bremsdruck nur bis zu einem vorgegebenen, zum Halten des Fahrzeugs ausreichenden Restdruck abgebaut. Zum Lösen der Radbremse wird ein Mehrwegeventil, das im Druckmittelweg eingefügt ist, durch ein vom Fahrer ausgelöstes oder durch ein vom Fahrverhalten des Fahrzeugs oder dem Drehverhalten der Räder abhängiges Signal auf Durchlaß geschaltet.

Eine Anordnung zum Halten eines Fahrzeugs beim Anfahren am Berg, die einen elektrisch betätigbaren, über ein Gestänge oder ein Seilzug auf die Feststellbremse des Fahrzeugs wirkenden Aktuator besitzt, ist in der DE 4.023.705 A1 beschrieben. Die zugehörige Elektronik zur Steuerung des Aktuators erhält Eingangssignale von Radsensoren und von Schaltern, die mit dem Gaspedal, dem Getriebe, der Kupplung usw. gekoppelt sind.

Der Erfindung liegt nun die Aufgabe zugrunde, ein Verfahren zu entwickeln, das in den unterschiedlichen Situationen dem Fahrer das Halten des Fahrzeugs und das Anfahren am Berg erleichtert. Das Verfahren soll je nach Situation in der geeigneten Weise in das Bremsensystem eingreifen.

Es hat sich herausgestellt, daß diese Aufgabe durch das im Anspruch 1 beschriebene Verfahren gelöst wird. Die Bremskraft wird in Abhängigkeit von der jeweiligen Situation bzw. in Anpassung an die jeweiligen Gegebenheiten aufrecht- bzw. konstantgehalten, erhöht oder abgebaut wird. Als Kriterium für die jeweilige Situation und für den Fahrerwunsch werden folgende Eingangsinformationen gewonnen und ausgewertet:
Fahrzeug(referenz)geschwindigkeit,
Bremspedalbetätigung,
Anfahrmoment (oder Kupplungs- und Fahrpedalbetätigung),
Betriebszustand (an/aus) des Antriebsmotors oder Einschaltung der Zündung,
Betätigung der Feststellbremse und
Schaltzustand (ein/aus) des Haltesystems.
Durch logische Verknüpfung und Auswertung der Eingangssignale wird auf den Fahrerwunsch geschlossen und der Druck in der geeigneten Weise moduliert. Beim Überschreiten einer Fahrzeuggeschwindigkeitsschwelle oder beim Betätigen eines Ausschalters wird das Haltesystem außer Funktion gesetzt.

Aus sicherheitstechnischen Überlegungen wird gemäß einem vorteilhaften Ausführungsbeispiel der Erfindung mit Hilfe eines Türkontaktes bei aktiviertem Haltesystem ein Warnsignal ausgelöst, sobald die Fahrertüre geöffnet wird. Vorteilhaft kann es außerdem sein, statt des Türkontaktes oder zusätzlich einen Sitzkontakt vorzusehen, der bei aktiviertem Haltesystem ein Warnsignal hervorruft, sobald der Fahrersitz entlastet wird.

Ein Ausführungsbeispiel des erfindungsgemäßen Verfahrens besteht darin, daß dieses mit Hilfe einer geregelten hydraulischen Bremsanlage, insbesondere als Bestandteil einer mit einem Antriebsschlupfregelungssystem ausgerüsteten Bremsanlage, ausgeführt wird, wobei zur Aufbringung und Steuerung der Bremskraft Druck in die Radbremsen eingesteuert und moduliert wird.

In den Unteransprüchen sind noch weitere vorteilhafte Ausführungsbeispiele des Verfahrens nach der Erfindung beschrieben.

Weitere Einzelheiten der Erfindung gehen aus der folgenden Beschreibung anhand der beigefügten Abbildungen hervor.

### Es zeigen

- Fig. 1: in schematischer Darstellung die wesentlichen Komponenten einer Anordnung zur Durchführung des erfindungsgemäßen Verfahrens auf Basis einer Bremsanlage mit Blockierschutz- und Antriebsschlupfregelung und
- Fig. 2: tabellarisch die logische Verknüpfung der nach einem Ausführungsbeispiel der Erfindung ausgewerteten Schaltsignale.

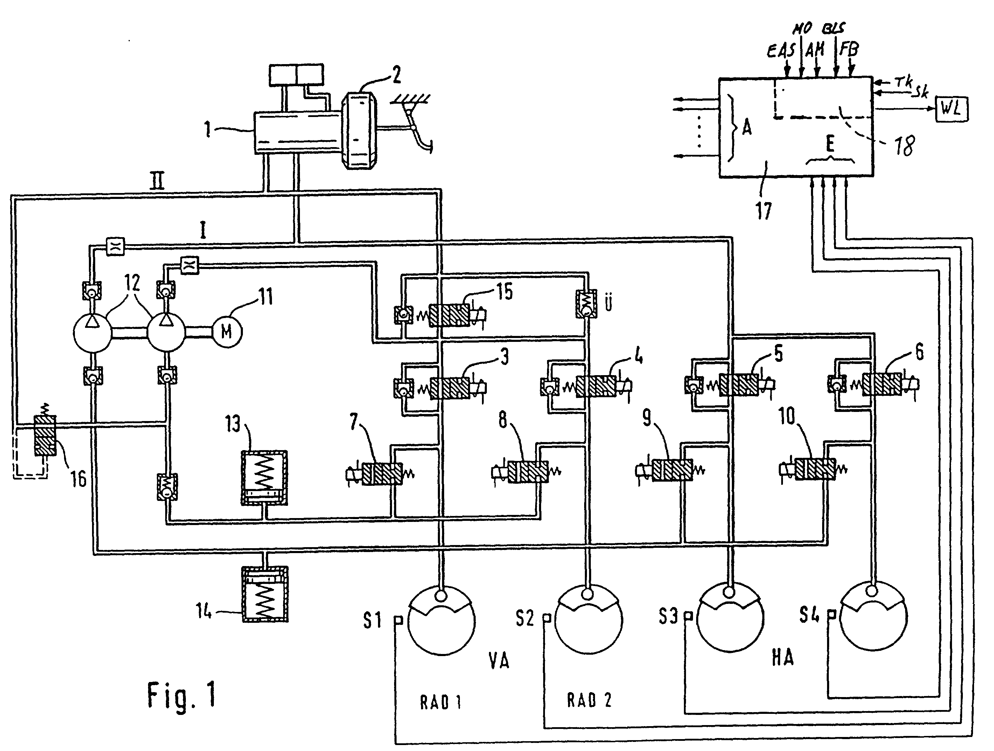

Die Anordnung nach Fig. 1 dient in erster Linie zur zur Blokkierschutzregelung und zur Antriebsschlupfregelung durch Bremseneingriff. Die Bremsanlage ist zweikreisig. An einem Bremskreis I sind die nichtangetriebenen Fahrzeugräder, hier der Räder der Hinterachse HA, an den Bremskreis II die Räder der Vorderachse VA angeschlossen.

Zu der Bremsanlage gehört ein Tandem-Hauptzylinder 1, mit einem vorgeschalteten Unterdruckverstärker 2. Jedem Fahrzeugrad ist ein in der Ruhestellung auf Durchlaß geschaltetes Einlaßventil 3 bis 6 und ein in der Ruhestellung sperrendes Auslaßventil 7 bis 10 zugeordnet. Zur Rückförderung des über die Auslaßventile 7 bis 10 in der Druckabbauphase eines Regelungsvorgangs abfließenden Druckmittels ist eine zweikreisige Hydraulikpumpe 12 mit einem gemeinsamen Antriebsmotor 11 vorgesehen. Außerdem befindet sich in jedem Bremskreis I,II ein Niederdruckspeicher 13,14, der in bekannter Weise in der Anfangsphase einer Blockierschutzregelung Druckmittel aufnimmt und dadurch den anfänglichen Druckabbau beschleunigt.

Der den Bremskreis II versorgende Zweig der Hydraulikpumpe 12 dient auch zur Bremsdruckerzeugung während eines Antriebsschlupf-Regelungsvorgangs. Ein im Druckmittelweg von dem Hauptzylinder 1 zu den Radbremsen der angetriebenen Räder eingefügtes Trennventil 15 wird zum Bremsdruckaufbau während eines Antriebsschlupf-Regelungsvorgangs benötigt. Über ein hydraulisch betätigtes 2/2-Wegeventil 16 wird in der Antriebsschlupf-Regelphase Druckmittel aus dem Hauptzylinder 1 zu der Saugseite der Hydraulikpumpe 12 des Hydraulikkreises II geleitet.

Ein Überdruckventil Ü begrenzt den im ASR-Betrieb den durch die Förderung der Pumpe 12 entstehenden Druck auf einen vorgegebenen Maximalwert.

Jedes Fahrzeugrad besitzt einen Radsensor S1 bis S4. Die Ausgangssignale dieser Sensoren werden den Eingängen E eines elektronischen Reglers 17 zugeführt, der die Signale auswertet und der über seine Ausgänge A Bremsdruck-Steuersignale zur Betätigung der Einlaß- und Auslaßventile 3 bis 6, 7 bis 10 und des Trennventils 15 sowie zum Ein- und Ausschalten des Pumpen-Antriebsmotors 11 liefert.

Die zusätzlichen Schaltkreise, Funktionen oder Programmteile zur Durchführung des erfindungsgemäßen Verfahrens sind durch gestrichelte Abtrennung eines Teils 18 des Reglers 17 symbolisch dargestellt. Zu diesem Reglerteil oder Programmteil 18 führen durch Pfeile dargestellte Signalleitungen EAS,MO,AM,FB und BLS, die nur oder in erster Linie zum Halten des Fahrzeugs bzw. zum Durchführen des erfindungsgemäßen Verfahrens benötigt werden; das Ausgangssignal eines Schalters 'BLS' (eines Bremslichtschalters) wird allerdings in den meisten Fällen auch für ein reines Blockierschutz- und/oder Antriebsschlupfregelungssystem verwendet. Mit 'EAS' ist der Ein/Ausschalter des Haltesystems, mit 'MO' ein dem Betriebszustand des Fahrzeug-Antriebsmotors oder das Einschalten der Zündung signalisierender Schalter bezeichnet. Das Signal 'AM' zeigt an, ob ein Anfahrmoment vorhanden ist; das Einrücken der Fahrzeugkupplung bei gleichzeitiger Betätigung des Fahrpedals kann ebenfalls als "Anfahrmoment" (AM = 1) bewertet werden. Über den Eingang 'FB' wird das Betätigen oder Anziehen der Feststellbremse des Fahrzeugs (FB = 1) gemeldet.

Ferner ist in dem hier dargestellten Ausführungsbeispiel der Erfindung der für das Haltesystem zuständige Reglerteil oder Programmteil 18 über Signalleitungen mit einem Türkontaktschalter Tk und einem Sitzkontaktschalter Sk verbunden. Mit Hilfe dieser Kontakte lassen sich Sicherheitsfunktionen unterschiedlicher Art verwirklichen.

Schließlich ist in Fig. 1 noch eine zu einer Warnlampe WL und/oder zu einem akustischen Signalgeber führende Signalleitung wiedergegeben, über die in bestimmten Situationen das Haltesystem ein Warnsignal abgibt.

Die Blockierschutzregelung wird in bekannter Weise mit Hilfe der Einlaßventile 3 bis 6 und der Auslaßventile 7 bis 10 durchgeführt. Die Pumpe 12 fördert das über die Auslaßventile abgeleitete Druckmittel in die Bremskreise I,II bzw. in den Hauptzylinder 1 zurück. Das Trennventil 15 ist im Antriebsschlupfregel-Modus auf Durchlaß geschaltet, damit in dieser Situation, in der der Hauptzylinder 1 drucklos ist, Druckmittel mit Hilfe der Pumpe 12 in die Vorderradbremsen eingesteuert werden kann.

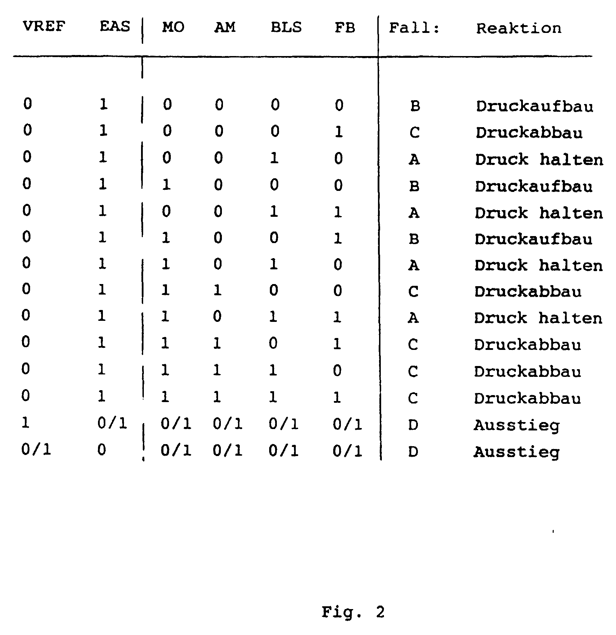

Die Wirkungsweise des erfindungsgemäßen Verfahrens veranschaulicht Fig. 2. Dargestellt sind die "möglichen" Signalkombinationen, die die unterschiedlichen Situationen wiedergibt, auf die das erfindungsgemäße Haltesystem in der geeigneten Weise reagiert. Die nicht dargestellten Signalkombinationen sind physikalisch nicht möglich oder für das erfindungsgemäße Verfahren ohne Bedeutung.

'0' und '1' sind die beiden Schaltpositionen der verwendeten Signale. 'VREF' symbolisiert die Fahrzeug(referenz)geschwindigkeit. Die übrigen Schalter-Symbole sind mit den zu dem Reglerteil 18 (siehe Fig. 1) führenden Eingangssignalen identisch.

Wie Fig. 2 zu entnehmen ist, sind für das Haltesystem nur Situationen von Interesse, in denen die Fahrzeug(referenz)geschwindigkeit VREF unter einem Grenzwert liegt (VREF = 0) und das Haltesystem aktiviert ist (EAS = 1).

In dieser Situation wird der Bremsdruck "gehalten" (Fall A), wenn kein Motormoment sensiert wird (AM = 0), jedoch die Betriebsbremse betätigt wird (BLS = 1). Wie zuvor erwähnt, kann auch eine eingerückte Kupplung bei gleichzeitiger Fahrpedalbetätigung als Signal für das Vorhandensein von Antriebsmoment gewertet werden; dies ist hier nicht näher dargestellt.

Die Bremskraft bzw. der Bremsdruck wird "erhöht" (Fall B), wenn bei ausgeschaltetem Antriebsmotor weder das Bremspedal, noch die Feststellbremse betätigt werden und kein Antriebsmoment sensiert wird, also bei
MO, AM, BLS, FB = 0,
oder wenn bei eingeschaltetem Antriebsmotor weder eine Bremspedalbetätigung noch ein Anfahrmoment sensiert werden, also bei
MO = 1, BLS = 0, AM = 0.
Ein "Abbau" des Bremsdruckes (Fall C) durch das erfindungsgemäße Haltesystem stellt sich ein, wenn bei ausgeschaltetem Antriebsmotor und freiem Bremspedal die Feststellbremse angezogen ist, also bei
MO = 0, BLS = 0, FB = 1
oder wenn bei eingeschaltetem Fahrzeugmotor ein Anfahrmoment sensiert wird, also in der Situation
MO = 1, AM = 1.

Fig. 2 läßt außerdem erkennen, daß immer dann (Fall D), wenn die Fahrzeug(referenz)geschwindigkeit den vorgegebenen Schwellwert überschreitet (VREF = 1) oder wenn das Haltesystem ausgeschaltet wird (EAS = 0), unabhängig von dem Pegel der übrigen Signale, ein "Ausstieg" aus der Regelung durch das erfindungsgemäße Haltesystem erfolgt.

Mit Hilfe des Türkontaktschalters Tk und/oder des Sitzkontaktschalters Sk - siehe Fig. 1 - wird in dem dargestellten Ausführungsbeispiel der Erfindung eine für das Haltesystem wichtige Information gewonnen. Das Öffnen der Türe und damit das Betätigen des Türkontaktschalters oder das Entlasten des Fahrersitzes läßt auf die Absicht des Fahrers schließen, das Fahrzeug zu verlassen. Bei aktiviertem Haltesystem (EAS = 1) wird in diesem Fall die Warnlampe WL angesteuert und/oder eine Sicherheitsfunktion ausgelöst. Es kann z.B. sinnvoll sein, die Funktion des Haltesystems durch Halten oder Erhöhen der Bremskraft bzw. des Bremsdruckes für eine bestimmte, vorgesehene Zeitspanne, die mit dem Aussteigen bzw. der Kontaktbetätigung beginnt, aufrechtzuerhalten.

Es könnte auch vorteilhaft sein, den Bremsdruck nach dem Öffnen der Türe langsam, d.h. in wenigen Sekunden, abzubauen, um den Fahrer zu veranlassen, durch Betätigen der Feststellbremse oder auf andere Weise die Initiative zu ergreifen. Es sind sehr unterschiedliche Sicherheitsfunktionen mit Hilfe des erfindungsgemäßen Haltesystems bzw. durch logische Verknüpfung der beschriebenen Eingangssignale denkbar.

Der Vollständigkeit halber sei noch erwähnt, daß das erfindungsgemäße Verfahren und die beschriebene Anordnung auch in Verbindung mit Fahrzeugen, die automatische Getriebe oder automatische Kupplungen besitzen, verwendbar sind. Eine logische Verknüpfung mit noch anderen Eingangssignalen, die für das Halten des Fahrzeugs und für das Verhalten des Fahrer von Bedeutung sind, ist ebenfalls möglich.

## Patentansprüche

1. Verfahren zum Halten eines Fahrzeugs auf geneigter Fahrbahn und beim Anfahren am Berg, bei dem unter Berücksichtigung der Fahrzeuggeschwindigkeit und der Bremspedalbetätigung oder entsprechender Kriterien Bremskraft an einzelnen oder an mehreren Fahrzeugrädern, insbesondere an den Rädern einer Achse, aufgebracht wird, d.h. aufrechterhalten, erhöht und wieder abgebaut wird, bei dem zusätzlich zur Sensierung der Fahrzeuggeschwindigkeit (VREF) und Bremspedalbetätigung (BLS) das Anfahrmoment (AM) ermittelt wird,
der Betriebszustand des Fahrzeugmotors (MO) oder die Einschaltung der Zündung bestimmt werden,
das Betätigen einer Fahrzeug-Feststellbremse (FB) und das Aktivieren bzw. Einschalten des Haltesystems (EAS) festgestellt, und diese Daten logisch verknüpft sowie ausgewertet werden
wobei, solange das Haltesystem aktiviert bzw. eingeschaltet (EAS) ist und die Fahrzeuggeschwindigkeit (VREF) unter einem Grenzwert liegt,
- die Bremskraft aufrechterhalten (Fall A) wird, wenn das Bremspedal betätigt ist (BLS = 1) und kein Anfahrmoment (AM = 0) sensiert wird,
- die Bremskraft erhöht wird (Fall B), wenn bei ausgeschaltetem Antriebsmotor (MO = 0) weder das Bremspedal (BLS = 0), noch die Feststellbremse (FB = 0) betätigt werden oder
wenn bei eingeschaltetem Motor (MO = 1) weder eine Bremspedalbetätigung (BLS = 0) noch ein Anfahrmoment (AM = 0) festgestellt werden und
- die Bremskraft abgebaut wird (Fall C), wenn bei ausgeschaltetem Motor (MO = 0) und nicht betätigtem Bremspedal (BLS = 0) die Feststellbremse (FB = 1) angezogen ist oder
bei eingeschaltetem Motor (MO = 1) ein Anfahrmoment (AM = 1) sensiert wird,
- und wobei (Fall D) beim Überschreiten der Fahrzeuggeschwindigkeitsschwelle (VREF = 1) bzw. beim Sensieren von Fahrzeugbewegung und/oder beim Betätigen des Ausschalters (EAS = 0) das Haltesystem außer Funktion gesetzt wird.

2. Verfahren nach Anspruch 1, dadurch **gekennzeichnet**, daß mit Hilfe eines Türkontaktes (Tk) bei aktiviertem Haltesystem (EAS = 1) ein Warnsignal (WL) ausgelöst wird, sobald die Fahrertüre geöffnet wird.

3. Verfahren nach Anspruch 1 oder 2, dadurch **gekennzeichnet**, daß mit Hilfe eines Sitzkontaktes (Sk) im Fahrersitz bei aktiviertem Haltesystem ein Warnsignal (WL) ausgelöst wird, sobald der Fahrersitz entlastet wird.

4. Verfahren nach Anspruch 2 oder 3, dadurch **gekennzeichnet**, daß beim Betätigen des Türkontaktes(Tk) und/oder des Sitzkontaktes (Sk) das Haltesystem sofort oder nach einer vorgegebenen Verzögerung außer Funktion gesetzt wird.

5. Verfahren nach einem oder mehreren der Ansprüche 1 bis 4, dadurch **gekennzeichnet**, daß das Einrücken der Kupplung im Antriebsstrang des Fahrzeugs in Verbindung mit einer Fahrpedalbetätigung als Signal für das Vorhandensein von Anfahrmoment (AM = 1) gewertet wird.

6. Verfahren nach einem oder mehreren der Ansprüche 1 bis 5, dadurch **gekennzeichnet**, daß dieses mit Hilfe von Komponenten einer geregelten hydraulischen Bremsanlage durchgeführt wird, wobei zur Aufbringung und Steuerung der Bremskraft Druck in die Radbremsen eingesteuert und moduliert wird.

7. Verfahren nach Anspruch 6, dadurch **gekennzeichnet**, daß zum Aufbringen der Bremskraft ein Druckaufbau- oder Einlaßventil der geregelten hydraulischen Bremsanlage mit einer Pulsfolge angesteuert wird.

8. Verfahren nach Anspruch 6 oder 7, dadurch **gekennzeichnet**, daß eine Bremsanlage mit einem Antriebsschlupfregelungssystem (ASR) verwendet wird, das durch zusätzliche Schaltkreise und/oder Programmteile (18), die für das Haltesystem erforderlich sind, erweitert wird.

## Claims

1. Method of retaining a vehicle on an inclined roadway and when starting uphill, wherein the brake force on individual or on several vehicle wheels, in particular, on the wheels of one axle is generated, namely maintained, increased and decreased again, in consideration of the vehicle speed, the brake pedal application, or corresponding criteria,
wherein the drive torque (AM) is determined in addition to sensing the vehicle speed (VREF) and brake pedal application (BLS),
the operating condition of the vehicle engine (MO) or the starting of the ignition are determined,
the application of a vehicle parking brake (FB) and the activation or switching on of the retaining system (EAS) is established, and these data are logically combined and evaluated,
wherein, as long as the retaining system is activated or switched on (EAS) and the vehicle speed (VREF) is below a limit value
- the brake force is maintained (case A) when the brake pedal is applied (BLS = 1) and no drive torque (AM = 0) is sensed,
- the brake force is increased (case B)
when the driving engine is switched off (MO = 0) and neither the brake pedal (BLS = 0) nor the parking brake (FB = 0) is activated, or
when the driving engine is switched on (MO = 1) and neither brake pedal application (BLS = 0) nor drive torque (AM = 0) is sensed, and
- the brake force is reduced (case C)
when the parking brake (FB = 1) is applied, the engine is switched off (MO = 0) and the brake pedal is not applied (BLS = 0), or
when the engine (MO = 1) is switched on and a drive torque (AM = 1) is sensed,
- and wherein (case D) the retaining system is deactivated when the vehicle speed threshold (VREF = 1) is exceeded or when movements of the vehicle are sensed and/or when the off-switch (EAS = 0) is activated.

2. Method as claimed in claim 1,
**characterized** in that a warning signal (WL) is triggered by a door contact (Tk) as soon as the driver's door is opened, with the retaining system activated (EAS = 1) .

3. Method as claimed in claim 1 or claim 2,
**characterized** in that, when the retaining system is activated, a warning signal (WL) is triggered by a seat contact (Sk) in the driver's seat as soon as the driver's seat is relieved from load.

4. Method as claimed in claim 2 or claim 3,
**characterized** in that the retaining system is deactivated instantaneously or after a defined deceleration when the door contact (Tk) and/or the seat contact (Sk) is activated.

5. Method as claimed in any one or more of claims 1 to 4,
**characterized** in that the engagement of the clutch in the transmission line of the vehicle in connection with an accelerator pedal application is evaluated as a signal for the existence of a drive torque (AM = 1).

6. Method as claimed in any one or more of claims 1 to 5,
**characterized** in that the method is implemented by means of components of a controlled hydraulic brake system, wherein pressure is introduced into the wheel brakes and modulated to generate and control the brake force.

7. Method as claimed in claim 6,
**characterized** in that a pressure-increase or inlet valve of the controlled hydraulic brake system is actuated by a pulse train to generate brake force.

8. Method as claimed in claim 6 or claim 7,
**characterized** in that a brake system with a traction slip control system (TCS) is used which is extended by additional circuits and/or program parts (18) that are necessary for the retaining system.

## Revendications

1. Procédé de retenue d'un véhicule sur une route inclinée et au démarrage en côte, dans lequel, en prenant en compte la vitesse du véhicule et l'actionnement de la pédale de frein, ou d'autres critères correspondants, un effort de freinage est appliqué à des roues individuelles ou à plusieurs roues du véhicule, en particulier aux roues d'un essieu, **c'est-à-dire** qu'il est maintenu, augmenté et diminué, et dans lequel, en plus de la détection de la vitesse du véhicule (VREF) et de l'actionnement de la pédale de frein (BLS),
on détermine le couple de démarrage (AM),
on détermine l'état de marche du moteur du véhicule (MO) ou la mise en contact de l'allumage,
on relève l'actionnement d'un frein de stationnement (FB) du véhicule et l'activation ou la mise en marche du système de retenue (EAS),
ces données étant ensuite mises en relation par un chaînage logique, et analysées,
où, tant que le système de retenue est activé ou mis en marche (EAS), et tant que la vitesse du véhicule (VREF) se situe en dessous d'une valeur seuil,
- l'effort de freinage est maintenu (cas A), si la pédale de frein est actionnée (BLS = 1) et aucun couple de démarrage n'est détecté (AM = 0),
- l'effort de freinage est augmenté (cas B), si, lorsque le moteur de propulsion est arrêté (MO = 0), ni la pédale de frein (BLS = 0), ni le frein de stationnement (FB = 0) sont actionnés,
ou si, lorsque le moteur est en marche (MO = 1), aucun actionnement de la pédale de frein (BLS = 0) ni couple de démarrage (AM = 0) ne sont détectés, et
- l'effort de freinage est diminué (cas C), si, lorsque le moteur est arrêté (MO = 0) et lorsque la pédale de frein n'est pas actionnée (BLS = 0), le frein de stationnement est serré (FB = 1),
ou si, lorsque le moteur est en marche (MO = 1), on détecte un couple de démarrage (AM = 1),
et où (cas D), en cas de dépassement du seuil de vitesse du véhicule (VREF = 1), ou en cas de détection d'un déplacement du véhicule et/ou en cas de manipulation de l'interrupteur (EAS = 0), le système de retenue est commuté hors d'état de marche.

2. Procédé selon la revendication 1, caractérisé en ce qu'un signal d'avertissement (WL) est déclenché à l'aide d'un contacteur de portière (TK), lorsque le système de retenue est activé (EAS = 1), dès que la portière du véhicule est ouverte.

3. Procédé selon la revendication 1 ou 2, caractérisé en ce qu'un signal d'avertissement (WL) est déclenché à l'aide d'un contacteur de siège (SK) intégré dans le siège du conducteur, lorsque le système de retenue est activé, dès que le siège du conducteur est déchargé.

4. Procédé selon la revendication 2 ou 3, caractérisé en ce que, lors de l'actionnement du contacteur de portière (TK) ou du contacteur de siège (SK), le système de retenue est commuté hors d'état de marche soit immédiatement, soit avec une temporisation prédéterminée.

5. Procédé selon l'une ou plusieurs des revendications 1 à 4, caractérisé en ce que l'engagement de l'embrayage dans le train de propulsion du véhicule, en association avec un actionnement de la pédale d'accélérateur, est interprété comme un signal indiquant la présence d'un couple de démarrage (AM = 1).

6. Procédé selon l'une ou plusieurs des revendications 1 à 5, caractérisé en ce qu'il est mis en oeuvre à l'aide de composants d'un système de freinage hydraulique à régulation, où, pour appliquer et pour régler l'effort de freinage, de la pression est introduite dans les freins de roues, et est modulée.

7. Procédé selon la revendication 6, caractérisé en ce que, pour appliquer un effort de freinage, on commande une vanne de montée en pression ou d'admission d'un système de freinage hydraulique à régulation via une séquence d'impulsions.

8. Procédé selon la revendication 6 ou 7, caractérisé en ce qu'on utilise un système de freinage muni d'un système de régulation anti-patinage en traction (ASR), qui est complété de circuits de commande et/ou de parties de programme supplémentaires (18) nécessaires au système de retenue.
